# EUROPÄISCHE PATENTANMELDUNG

(11) **EP 2 335 835 A1**
(43) Veröffentlichungstag der Anmeldung: **22.06.2011**
(21) Anmeldenummer: 09015474.1
(22) Anmeldetag: 15.12.2009
(51) Int. Cl.: B06B 1/02, B65G 27/32

(54) **Steuergerät für eine Schwingfördereinrichtung**

(71) Anmelder: FEHLINGS AUTOMATION GmbH, 65396 Walluf (DE)
(72) Erfinder: Fehlings, Harald, D-65396 Walluf (DE)
(74) Vertreter: Quermann, Helmut

(57) **Zusammenfassung**

Die vorliegende Erfindung betrifft ein Steuergerät zur Ansteuerung zumindest eines elektromechanischen Wandlers einer Schwingfördereinrichtung. Das Steuergerät weist zumindest ein Speichermodul (12) zum Abspeichern zumindest einer vorgegebenen elektrischen Signalfolge (32; 42) und ein Wiedergabemodul (18) auf, welches zum Auslesen des Speichermoduls (12), zum wiederholenden Abspielen der gespeicherten Signalfolge (32; 42) sowie zur Beaufschlagung des Wandlers mit der Signalfolge (32; 42) ausgebildet ist.

## Beschreibung

Die vorliegende Erfindung betrifft ein Steuergerät zur Ansteuerung eines elektromechanischen Wandlers einer Schwingfördereinrichtung, ein zugehöriges Steuerungssystem sowie eine gattungsgemäße Schwingfördereinrichtung. Daneben betrifft die Erfindung ein Verfahren zur Ansteuerung eines für eine Schwingfördereinrichtung vorgesehenen elektromechanischen Wandlers, insbesondere eines piezo-elektrischen Wandlers.

Schwingfördereinrichtungen finden insbesondere bei der Vereinzelung und der Zufuhr einzelner Bauteile für die Massenfertigung von Produkten unterschiedlichster Industriezweige vielfach Verwendung. Mittels Schwingfördereinrichtungen, die etwa als Wendelförderer, Fördertopf, Bunker, Linearförderer sowie als Bandförderer und dergleichen ausgebildet sind, können Mikro- und Makrobauteile etwa zu Montagezwecken im industriellen Massenfertigungsprozess, etwa einer Montagestation zugeführt werden.

Schwingfördereinrichtungen erfordern den Einsatz zumindest eines elektromechanischen Wandlers. Neben Wandlereinrichtungen, die auf der sogenannten Magnet-Technik basieren, kommen hierbei bevorzugt piezo-elektrische Wandler zum Einsatz. Während bei der magnettechnischen Implementierung ein Federelement mittels eines Elektromagneten periodisch ausgelenkt und infolge der Federwirkung eine oszillierende Bewegung erfährt, basiert der Piezo-Wandler auf dem sogenannten piezo-elektrischen Effekt.

Die Beaufschlagung eines piezo-elektrischen Elements mit elektrischer Spannung führt zu einer kontrollierten Dilatation oder Kontraktion, mithin zu einer Längenänderung des piezo-elektrischen Elements in Abhängigkeit der vorherrschenden Spannung. Piezo-Wandler können gegenüber bekannten Magnet-Systemen mit einer weitaus höheren Anregefrequenz betrieben werden.

Üblicherweise werden bekannte Piezo-Wandler für Anwendungen im Bereich der Schwingungs- oder Vibrationsförderung mit Sinus-, Rechteck- oder Sägezahnsignalen in einem Frequenzbereich bis 500 Hz beaufschlagt, wobei die Erregungsfrequenz für den elektromechanischen Wandler oder Aktuator aus der Netzfrequenz einer Strom- bzw. Spannungsquelle abgeleitet wird.

Eine von einem oder von mehreren Aktuatoren in Schwingung oder Vibration versetzte Fördereinheit weist unweigerlich eine gewisse Eigen-Schwingungscharakteristik auf. Je nach Gewicht und Materialbeschaffenheit der Fördereinheit und der gewählten Anregefrequenz und -Amplitude können Resonanzphänomene auftreten, die ein gezieltes Fördern oder Vereinzeln der mittels der Fördereinheit zu transportierenden Bauteile beeinträchtigen.

Da die Eigen-Schwingungscharakteristik einer Schwingfördereinrichtungen in hohem Maße vom Gewicht und der jeweiligen Konfiguration der Fördereinheit abhängt und die Schwingungsanregung außerhalb eines Resonanzbereichs erfolgen soll, wird beispielsweise in der DE 100 05 934 A1 ein elektronisch steuerbares Stellglied beschrieben, an dem zumindest ein Wandler eines Fördersystems angeschlossen ist. Dieses elektronisch steuerbare Stellglied erzeugt hierbei eine Wechselladung oder Wechselspannung, deren Ausgangsfrequenz und Ausgangsamplitude mit dem Stellglied einstellbar ist. Das dementsprechend ausgestattete Fördersystem wird dabei derart betrieben, dass die Resonanzfrequenz des mit einem Schwinger erregten Wandlers ermittelt und die Erregungsfrequenz unter Berücksichtigung der Resonanzfrequenz angepasst wird.

Die sogenannte mechanische Eigenform des Fördersystems wird durch das mechanische Gesamtgebilde aus Fördergut, Fördereinheit, Wandler und zugehöriger Aufnahmevorrichtung bestimmt. Die Abstimmung der Frequenz eines Wandlers erfolgt dabei entweder durch Abstimmung des Gesamtgebildes auf die vorgesehene Anregefrequenz, etwa durch Gewichtsverlagerung oder umgekehrt durch Abstimmung der Anregefrequenz auf das mechanische Gesamtgebilde.

Sollen beispielsweise besonders dünne oder kleine Werkstücke oder Bauteile mit einem Linearförderer auf Stau gefördert werden, so darf der sogenannte Mikrohub des Bauteils nicht größer sein als die Bauhöhe des Bauteils selbst, denn ansonsten würden die zu befördernden Bauteile übereinander gestapelt.

Folglich begrenzt die Größe der Bauteile die Schwingungsamplitude. Bei Verwendung herkömmlicher Steuergeräte, die einen Frequenzbereich bis maximal 500 Hz abdecken, können aufgrund der durch das Bauteil vorgegebenen maximalen Schwingungsamplitude nur vergleichsweise geringe Fördergeschwindigkeiten erreicht werden. Eine bloße Erhöhung der Anregefrequenz würde jedoch zu weitreichenden Problemen führen, da eine höhere Anregefrequenz eine größere Beschleunigung der Fördereinheit, etwa der Förderschiene bedingt.

Die hierbei entstehenden Beschleunigungskräfte gingen wiederum mit vergleichsweise starken bzw. dynamisch auf die Förderschiene einwirkenden Biegekräften einher, die eine dynamische Verformung der Förderschiene bzw. der Fördereinheit innerhalb der mechanischen Eigenformen der Förderschiene bis zu deren n-ten Ordnung bewirken würden

Die bei vergleichsweise hohen Anregefrequenzen oberhalb 500 Hz auftretenden Biegekräfte können ferner zu unerwünschten Resonanz- oder Tilgungsphänomenen führen, die die Förderung oder sonstige mechanische Manipulationen der mit der Schwingfördereinrichtung zuzuführenden Objekte nachhaltig beeinträchtigen kann.

Zur Beseitigung solcher Resonanzphänomene kommen zwar grundsätzlich Maßnahmen wie ein Vermindern der Erregung, ein Dämpfen, eine Schwingungsisolierung oder das Anbringen passiver Zusatzsysteme, wie beispielsweise Schwingungstilger, infrage. Sämtliche dieser Maßnahmen gehen jedoch zu Lasten der Förderleistung der Schwingfördereinrichtung.

Es ist daher Aufgabe der vorliegenden Erfindung, eine möglichst einfache und kostengünstige Ansteuerung für einen elektromechanischen Wandler einer Schwingfördereinrichtung sowie ein zugehöriges Verfahren zum Ansteuern solcher Wandler zur Verfügung zu stellen. Die erfindungsgemäße Ansteuerung soll inhärente Resonanzphänomene weitgehend unterdrücken bzw. eine Schwingungsanregung ermöglichen, die insbesondere bei hohen Anregungsfrequenzen ein kontrolliertes und zuverlässiges Zuführen der zu fördernden Objekte ermöglicht. Des Weiteren soll die Ansteuerung flexibel und möglichst ohne nennenswerten apparativen Aufwand an sich ändernde Randbedingungen anpassbar sein.

Diese der Erfindung zugrundeliegende Aufgabenstellung wird erfindungsgemäß mit einem Steuergerät nach Patentanspruch 1, mit einem Verfahren zur Ansteuerung eines elektromechanischen Wandlers einer Schwingfördereinrichtung gemäß Patentanspruch 7, mit einem Steuerungssystem gemäß Patentanspruch 12 sowie einer Schwingfördereinrichtung nach Patentanspruch 13 gelöst. Einzelne vorteilhafte Ausgestaltungen der Erfindung sind Gegenstand der abhängigen Patentansprüche.

Das erfindungsgemäße Steuergerät ist zur Ansteuerung zumindest eines elektromechanischen Wandlers, bevorzugt eines piezo-elektrischen Wandlers einer Schwingfördereinrichtung vorgesehen, ohne jedoch auf derartige Schwingungserreger beschränkt zu sein. Grundsätzlich ist das Steuergerät zur Ansteuerung sämtlicher Wandlereinrichtungen ausgelegt, mittels derer ein vorzugsweise oszillierendes elektrisches Signal in eine entsprechend geartete oszillierende mechanische Bewegung übertragbar bzw. umwandelbar ist.

Das erfindungsgemäße Steuergerät weist hierzu ein Speichermodul zum Abspeichern zumindest einer vorgegebenen elektrischen Signalfolge sowie ein Wiedergabemodul auf, welches zum Auslesen des Speichermoduls im Betrieb des Steuergeräts vorgesehen ist. Das Wiedergabemodul ist dabei zur wiederholenden Erzeugung, bzw. zum fortwährend wiederholenden Abspielen der gespeicherten Signalfolge sowie zur Beaufschlagung des elektromechanischen Wandlers mit der ausgelesenen Signalfolge ausgebildet.

Im Unterschied zu herkömmlichen Steuergeräten verfügt das erfindungsgemäße Steuergerät über keinen Frequenzgenerator, Prozessor oder dergleichen Einrichtungen zur Erzeugung eines oszillierenden elektrischen Signals. Das erfindungsgemäße Steuergerät ist vielmehr lediglich dazu ausgelegt, die zuvor in seinem Speichermodul abgelegten Signalfolgen auszulesen und in Form von einer elektrischen Steuersignalfolge zu reproduzieren.

Der Funktionsumfang des Steuergeräts kann daher gegenüber herkömmlichen Steuergeräten auf einen reinen Abspielbetrieb, bzw. Abspielmodus reduziert werden. Des Weiteren erweist sich das Abspielen einer vorgegebenen und abgespeicherten Signalfolge insoweit als vorteilhaft, als dass auf diese Art und Weise hinsichtlich ihrer Frequenz und Amplitude beliebig verlaufende, besondere unregelmäßige und aperiodische Signalfolgen zum Betreiben des elektromechanischen Wandlers Verwendung finden können.

Indem der Wandler mit einer vergleichsweise unregelmäßigen und aperiodischen Steuersignalfolge beaufschlagt wird, kann in einfacher Art und Weise der Ausbildung von Resonanzphänomenen der Fördereinheit begegnet werden. Da anders als bei herkömmlichen Steuergeräten die Signalfolge nicht berechnet, sondern lediglich eine oder mehrere extern erzeugte und im Gerät abgespeicherte Signalfolgen ggf. über eine Verstärkerschaltung direkt dem Wandler zugeführt werden, kann mit vergleichsweise einfachen und kostengünstig zu implementierenden Komponenten ein in einem Frequenzbereich oberhalb 500 Hz betreibbares Steuergerät zur Verfügung gestellt werden, bei welchem die aus dem Stand der Technik bekannten Resonanzphänomene kaum noch auftreten.

Nach einer vorteilhaften Weiterbildung der Erfindung ist dabei insbesondere vorgesehen, dass das Wiedergabemodul zur Wiedergabe der gespeicherten elektrischen Signalfolge in Form einer Endlosschleife ausgebildet ist. Sobald das Ende einer abgespeicherten Signalfolge im Wiedergabemodus erreicht ist, springt die Wiedergabe wieder an den Anfang der Signalfolge zurück. Die Abspieldauer einer Signalfolge liegt dabei vorzugsweise im Sekunden- oder gar Minutenbereich, so dass eine Periodendauer durch wiederholendes Abspielen der gespeicherten Signalfolge außerhalb des Resonanzspektrums der Fördereinheit bzw, der Schwingfördereinrichtung liegt.

Nach einer besonders vorteilhaften Ausgestaltung der Erfindung ist dabei ferner vorgesehen, dass das Speichermodul einerseits zum Abspeichern mehrerer in Frequenz und Amplitude unterschiedlicher Einzelsignalfolgen ausgebildet ist, und dass das Wiedergabemodul zur gleichzeitigen Wiedergabe mehrerer oder sämtlicher Einzel-Signalfolgen und/oder zur Wiedergabe einer Superposition mehrerer Einzel-Signalfolgen ausgebildet ist. So kann nach der Erfindung beispielsweise vorgesehen werden, eine Anzahl, beispielsweise 20 und mehr Einzel-Signalfolgen gleicher oder unterschiedlicher Länge im Speichermodul abzuspeichern.

Im Betrieb des Steuergeräts kann dabei vorgesehen werden, einzelne der abgespeicherten Signalfolgen selektiv und endlos wiederholend abzuspielen. In der Superposition der Einzel-Signalfolgen können dabei ausgewählte Einzel-Signalfolgen mit einer höheren Gewichtung versehen werden als andere. Das heißt, die Einzel-Signalfolgen können bspw. mit unterschiedlichen skalaren Faktoren linear superponiert werden.

Hierbei kann ferner vorgesehen werden, die Phasenbeziehung der Einzel-Signalfolgen untereinander zur Erzeugung einer möglichst unregelmäßigen und aperiodischen Schwingungsanregung für den Wandler zu variieren. Je nach Betriebsmodus des Steuergeräts kann die Selektion von Einzelsignalfolgen aktiv geändert werden, so dass je nach Anforderungsprofil an das Steuergerät unterschiedlichste Signalfolgen zur Beaufschlagung des elektromechanischen Wandlers zur Verfügung gestellt werden können, die auf die jeweiligen Förderbedingungen bzw. an die Eigenform des Fördersystems angepasst sind.

Nach einer weiteren bevorzugten Ausgestaltung der Erfindung ist vorgesehen, dass das Speichermodul und/oder das Wiedergabemodul des Steuergeräts mittels einer Konfigurationseinrichtung konfigurierbar und/oder programmierbar ist. Mittels der Konfigurationseinrichtung, die beispielsweise als Personalcomputer (PC) ausgebildet sein kann, sind die zur Wiedergabe vorgesehenen elektrischen Signalfolgen und/oder die Einzel-Signalfolgen im Speichermodul abzulegen. Des Weiteren kann mittels der Konfigurationseinrichtung das Wiedergabemodul derart konfiguriert und/oder programmiert werden, dass das Steuergerät auch ohne angekoppelte Konfigurationseinrichtung selbsttätig und autark den Speicher des Speichermoduls auslesen und den elektromechanischen Wandler der Schwingfördereinrichtung mit den dafür vorgesehenen Steuersignalfolgen beaufschlagen kann.

Nach einer besonders vorteilhaften Ausgestaltung der Erfindung ist vorgesehen, dass die im Speichermodul abzulegende elektrische Signalfolge von einem oder von mehreren aufgenommenen akustischen Signalen ableitbar ist. Unter akustischen Signalen sind hierbei jegliche Geräusche und Klänge zu verstehen, die beispielsweise über ein Aufnahmegerät, etwa ein Mikrofon in elektrische Schwingungssignale umgewandelt werden. Hierbei kann ferner vorgesehen werden, synthetische Musiksignale, die beispielsweise von einem Synthesizer oder Sampleplayer erzeugbar sind, im Speichermodul abzuspeichern. Das Speichermodul kann beispielsweise auf EPROM oder Flash-EEPROM-Basis implementiert sein.

Zum Abspeichern der Signalfolgen kommen grundsätzlich jegliche digitalen Audioformate, wie etwa wave- oder mp3- Formate infrage. Beim Auslesen, bzw. beim Abspielen der im Speichermodul abgelegten Signalfolge ist insbesondere vorgesehen, dass das Wiedergabemodul entsprechend der gespeicherten Daten einen Bitstream erzeugt, welcher typischerweise mittels einer Verstärkereinheit dem zumindest einen Piezowandler zuzuführen ist. Hierbei erweist es sich als vorteilhaft, dass für die Reproduktion der im Speichermodul hinterlegten Daten das Steuergerät keinen eigens hierfür vorgesehenen Prozessor benötigt, sondern dass zum Abspielen der gespeicherten Signalfolge auf bestehende Wiedergabe- oder Abspielgeräte zurückgegriffen werden kann.

Neben digitalen Speichermedien und -formaten kommen prinzipiell aber auch analoge Speichermedien, wie beispielsweise Magnet- und Tonbänder infrage. Ferner kann nach der Erfindung vorgesehen sein, das Abspiel- und Speichermodul auch als eine einzige bauliche Einheit zu implementieren. So ist ggf. denkbar, das Steuergerät mit einem sogenannten Rompler zu versehen, der ähnlich wie ein Sampler gesampelte Klänge abspielen kann. Im Unterschied zu einem als Sampler implementierten elektronischen Klangerzeuger bezieht der Rompler jedoch seine Klänge aus einem Speicher. In vorteilhafter Weise können bei einem Rompler Vorverstärker, A/D-Wandler und RAM entfallen, wodurch die Herstellungskosten für das Steuergerät auf niedrigem Niveau gehalten werden können.

Das Zusammenwirken von Speichermodul und Wiedergabemodul ist derart, dass das Steuergerät quasi als Mehrspurtonband oder als digitaler Mehrspursampler fungiert. Dem Amplitudenverlauf und der Frequenzform der Einzel-Signalfolgen sind dabei keinerlei Grenzen gesetzt. Phasenlage und die Art der Superposition der Einzel-Signalfolgen sowie die Frequenzverhältnisse und Absolutfrequenzen der Einzel-Signalfolgen können dabei völlig beliebig gewählt und von der Konfigurationseinrichtung dementsprechend beliebig erzeugt werden.

Von Vorteil sind die Anfangs- und Endsequenzen der abzuspeichernden Signalfolgen aufeinander abgestimmt. Das heißt, das Ende einer Signalfolge geht weitgehend stetig in eine Anfangssequenz der jeweiligen Signalfolge über, so dass bei sich wiederholendem Abspielen der jeweiligen Signalfolge kein akustisch wahrnehmbares Störgeräusch, insbesondere keine Knackgeräusche ergeben, die unter Umständen negative Auswirkungen auf die Funktionalität der Fördereinheit hätten.

Neben einem Steuergerät betrifft die Erfindung des Weiteren ein Verfahren zur Ansteuerung zumindest eines elektromechanischen Wandlers einer Schwingfördereinrichtung. Hierbei ist vorgesehen, dass in einem ersten Schritt eine elektrische Signalfolge in einem Speichermodul eines mit dem Wandler gekoppelten Steuergeräts abgespeichert wird. Das Abspeichern und Erzeugen der Signalfolge erfolgt vorzugsweise mittels einer Konfigurationseinrichtung, etwa mittels PC. Beim Abspeichern ist insbesondere vorgesehen, eine Vielzahl unterschiedlich gearteter Einzel-Signalfolgen in einzelnen Speichersequenzen des Speichermoduls abzuspeichern, so dass ein zeitgleiches Auslesen mehrerer Einzel-Signalfolgen bei Bedarf erfolgen kann.

Im Betrieb der Schwingfördereinrichtung ist das Steuergerät dazu ausgebildet, zumindest einzelne im Speichermodul abgelegte Einzel-Signaffolgen auszulesen und in im Wege eines sich wiederholenden Endlosabspielens wiederzugeben. Hierbei ist insbesondere vorgesehen, mehrere Einzel-Signalfolgen gleichzeitig abzuspielen und auf diese Art und Weise zu superponieren, wobei die Auswahl der Einzel-Signalfolgen entweder von einem Anwender gesteuert oder durch Rückkopplung gemessener Förderparameter selbsttätig geändert werden kann.

Die Auswahl der Einzel-Signalfolgen zur Erzeugung eines den elektromechanischen Wandler beaufschlagenden Signals erfolgt insbesondere vor dem Hintergrund, die Fördereinheit außerhalb ihres Resonanzspektrums zur Schwingung anzuregen. Sollen mit der Fördereinheit beispielsweise verschiedenartige Bauteile befördert oder sortiert werden und/oder ändern sich beispielsweise die Massen- oder geometrischen Verhältnisse der Fördereinheit, so ändert sich in aller Regel deren Eigen-Schwingverhalten. Die Änderung des Schwingungsverhaltens der Fördereinheit kann dabei eine Änderung des Anregungssignals erfordern.

Nach der Erfindung ist hierbei insbesondere vorgesehen, keine Nachregelung im eigentlichen Sinne zu implementieren, sondern das Steuergerät lediglich in einen anderen Betriebsmodus zu schalten. Hierfür wird das Abspielen einzelner ausgewählter Einzel-Signalfolgen aktiviert oder deaktiviert. Alternativ hierzu kann auch die Phasenlage und/oder die Gewichtung der Einzel-Signalfolgen variiert werden.

Im Zuge des Abspeicherns der Signalfolge ist ferner vorgesehen, dass das Ende und der Anfang jeder Signalfolge bzw. Einzel-Signalfolge hinsichtlich Amplitude, Frequenz und/oder Signalflanke aufeinander abgestimmt werden. Anfangs- und Endsequenzen einzelner Signalfolgen sind dabei derart zu wählen oder zu modifizieren, dass sich ein stetiger, möglichst harmonischer Übergang vom Signalfolgenende zum Signalfolgenanfang ergibt. Ausgehend von einer synthetisch erzeugten oder akustisch generierten bzw. aufgenommenen Einzel-Signalfolge kann vor einem Abspeichern derselben stets eine Nachbearbeitung etwa im Sinne eines Abschneidens oder Kürzens einzelner Sequenzen der Signalfolge vorgesehen werden, so dass ein im Wesentlichen stetiger Übergang von Signalfolgenende zu Signalfolgenanfang gebildet werden kann.

Nach einem weiteren vorteilhaften Aspekt der Erfindung ist vorgesehen, dass die abzuspeichernde oder die wiederzugebende Signalfolge durch Überlagerung mehrerer Einzel-Signalfolgen derart gebildet wird, dass die Periodendauer der resultierenden, dem Wandler zuzuführenden Steuersignalfolge im Bereich mehrerer Minuten, vorzugsweise sogar im Bereich einer oder mehrerer Stunden liegt.

Nach alldem betrifft die Erfindung ferner ein Steuerungssystem zur Ansteuerung einer zumindest einen elektromechanischen Wandler aufweisenden Schwingfördereinrichtung mit einem zuvor beschriebenen Steuergerät sowie mit einer Konfigurationseinrichtung, typischerweise mit einem PC. Die Konfigurationseinrichtung ist dabei zur Erzeugung und/oder zur Bearbeitung einer oder mehrerer elektrischer Signalfolgen sowie zum Abspeichern der Signalfolgen in einem Speichermodul des Steuergeräts mit dem Steuergerät koppelbar.

Nach Überspielen erzeugter bzw. modifizierter Einzel- oder daraus resultierender Steuersignalfolgen kann die Konfigurationseinrichtung vom Steuergerät entkoppelt werden, wobei das Steuergerät schließlich in Form einer Endlosschleife einzelne ausgewählte oder variabel auszuwählende Einzel-Signalfolgen als Endlosschleife wiedergibt und die auf diese Art und Weise erzeugte Steuersignalfolge dem elektromechanischen Wandler, vorzugsweise einem piezo-elektrischen Wandler zuführt.

Durch diese Implementierung kann das Steuergerät besonders einfach und kostengünstig aufgebaut werden. Es benötigt insbesondere keine frequenzerzeugenden Module. Ferner kann durch eine Vielzahl abzuspeichernder Einzel-Signalfolgen, die je nach Bedarf auszuwählen und abzuspielen sind, ein vergleichsweise vielschichtiges Spektrum unterschiedlichster Signalfolgen für den Anwendungsfall generiert werden.

Schließlich betrifft die Erfindung eine Schwingfördereinrichtung zur Zufuhr und/oder zu Sortierung von Bauteilen mit zumindest einer Fördereinheit und mit zumindest einem elektromechanischen Wandler, der vom erfindungsgemäßen Steuergerät in der beschriebenen Art und Weise angesteuert wird.

Weitere Ziele, Merkmale sowie vorteilhafte Anwendungsmöglichkeiten der Erfindung sind in der nachfolgenden Beschreibung einzelner Ausführungsbeispiele unter Bezugnahme auf die Figuren dargelegt. Dabei bilden sämtliche in den Figuren bildlich dargestellten als auch im Text beschriebenen Merkmale sowohl in Alleinstellung als auch in jeglicher sinnvollen Kombination untereinander den Gegenstand der vorliegenden Erfindung.

Es zeigen:
- Fig. 1: ein Blockdiagramm einer Schwingfördereinrichtung mit Steuergerät und Konfigurator,
- Fig. 2: ein Diagramm zweier Einzel-Signalfolgen und eine durch Superposition hieraus resultierende Steuersignalfolge,
- Fig. 3: ein weiteres Beispiel einer vergleichsweise unregelmäßigen, aus zwei Einzel-Signalfolgen gebildeten Steuersignalfolge sowie
- Fig. 4: ein Flussdiagramm zur Durchführung des erfindungsgemäßen Verfahrens.

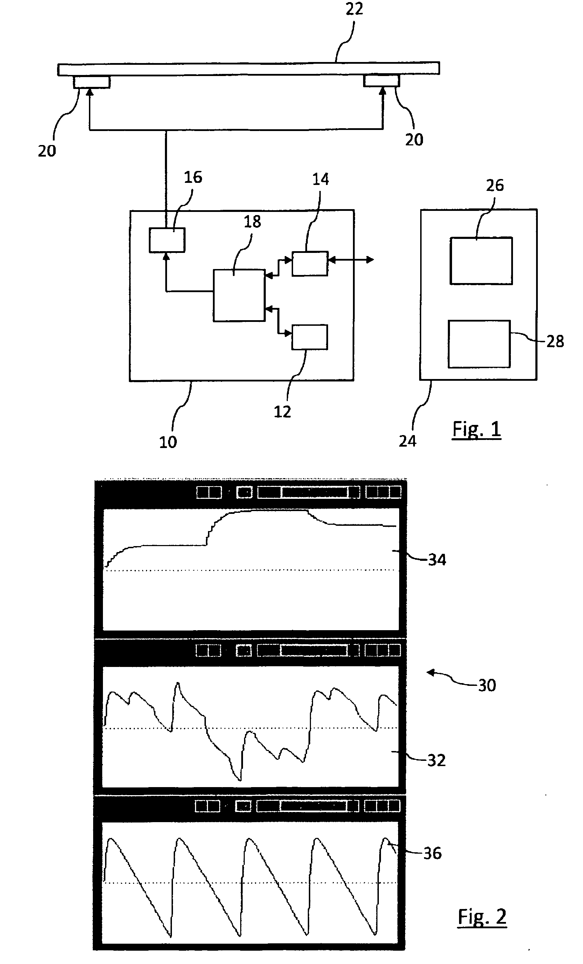

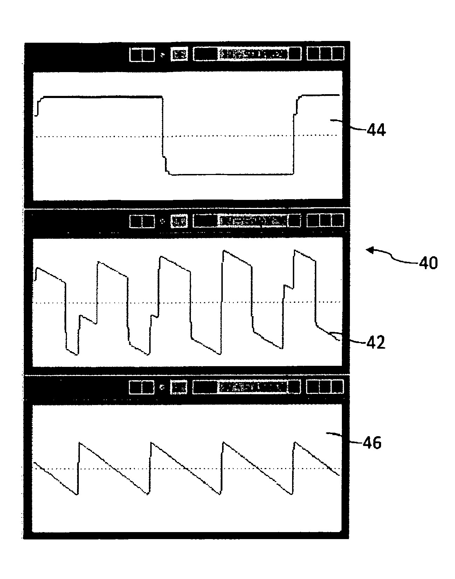

In Fig. 1 ist in schematischer Darstellung eine als Linearförderer ausgebildete Fördereinheit 22 dargestellt. Diese ist beispielsweise mit zwei voneinander beabstandet angeordneten piezo-elektrischen Wandlern 20 in Schwingung zu versetzen. Die dargestellten Piezo-Wandler 20 können dabei jeweils separat, in der Darstellung gemäß Fig. 1, aber auch gemeinsam mit einem Steuergerät 10 gekoppelt werden.

Das Steuergerät 10 zeichnet sich insbesondere durch ein Wiedergabemodul 18 sowie durch ein Speichermodul 12 aus. Das Speichermodul 12 dient dem Abspeichern vorgegebener alternierender elektrischer Signalfolgen, die vorzugsweise einen aperiodischen bzw. einen unregelmäßigen Amplitudenverlauf aufweisen. Im Betrieb der Fördereinheit 22 ist vorgesehen, die im Speichermodul 12 abgelegte Signalfolge in Form einer Endlosschleife über das Wiedergabemodul 18 und ggf. über einen optionalen Verstärker 16 den piezo-elektrischen Wandlern 20 zuzuführen.

Die Erfindung zeichnet sich hierbei insbesondere dadurch aus, dass die den Wandlern 20 zuzuführenden Signale nicht "on Board" im Steuergerät 10 generiert, sondern in diesem lediglich nur abgespeichert und von diesem wiedergegeben werden. Auf diese Art und Weise kann der Implementierungs- und Kostenaufwand zur Verwirklichung derartiger Steuergeräte 10 auf ein Minimum reduziert werden. Die Funktionalität des Steuergeräts ist somit der eines Romplers oder Sampleplayers vergleichbar.

Die Konfiguration des Steuergeräts 10 erfolgt mit Hilfe einer Konfigurationseinrichtung 24, die jeweils nur im Bedarfsfall mit dem Steuergerät 10 zu koppeln ist. Die Konfigurationseinrichtung 24 ist vorzugsweise als PC ausgebildet. Mittels einer auf die Erfindung abgestimmten Software erzeugt die Konfigurationseinrichtung 24 beliebige elektrische Signalfolgen, die aufbereitet zur Endloswiedergabe über eine Schnittstelle 14 dem Steuergerät 10 zugeführt und dort im Speichermodul 12 abgespeichert werden. Zu diesem Zweck weist die Konfigurationseinheit 24 zumindest eine Signalerzeugungseinheit 26 sowie ein User Interface bzw. ein Ein-/Ausgabemodul 28 auf.

Über das Ein-/Ausgabemodul 28 kann ein Benutzer die Erzeugung diverser Einzel-Signalfolgen und deren Superposition zueinander beliebig hinsichtlich Phasenbeziehung, Frequenz- und Amplitudenverlauf beeinflussen und steuern.

Durch Kopplung der Konfigurationseinrichtung 24 mit dem Steuergerät 10 können somit letztlich eine Vielzahl an Einzel-Signalfolgen im Speichermodul 12 des Steuergeräts 10 abgelegt werden.

Das Steuergerät 10 selbst kann dabei ferner über ein in der Fig. 1 nicht explizit gezeigtes Benutzer-Interface verfügen, über welches der Anwender bei abgekoppelter Konfigurationseinrichtung einzelne Betriebsmodi des Steuergeräts anwählen kann. Je nach gewähltem Betriebsmodus können dann ausgewählte Einzel-Signalfolgen zum Abspielen aktiviert oder deaktiviert werden, so dass auch ohne Kopplung an die Konfigurationseinrichtung 24 das Steuergerät 10 die für die jeweiligen Förder- und Einsatzbedingungen der Fördereinheit 22 angepassten bzw. optimierten Signalfolgen den piezo-elektrischen Wandlern 20 zur Verfügung stellen kann.

Es ist hierbei insbesondere vorgesehen, auch Anregungsfrequenzen oberhalb 500 Hz, insbesondere auch oberhalb 1 kHz vorzusehen, so dass auch Kleinstbauteile mit einer ausreichenden Fördergeschwindigkeit mittels der Fördereinheit befördert werden können.

In den Fig. 2 und 3 ist beispielhaft anhand zweier Einzelsignalfolgen 34, 36 bzw. 44, 46 die Erzeugung eines resultierenden, den Wandlern 20 zuzuführenden Steuersignals 32, 42 dargestellt. Während die Einzelsignalfolgen 36, 46 der beiden Diagramme 30, 40 jeweils ein sägezahnähnliches Profil aufweisen, ist die Einzel-Signalfolge 34 durch insgesamt drei Plateaus mit einer im Wesentlichen konstanten Amplitude gekennzeichnet, wobei die Signalamplitude zwischen diesen Plateaus einen nichtlinearen Verlauf aufweist. Durch lineare oder nichtlineare Superposition der beiden Einzel-Signalfolgen 34, 36 kann die Ausgangs-, bzw. Steuersignalfolge 32 erzeugt werden.

Diese ist bereits als unregelmäßig bzw. aperiodisch zu klassifizieren, so dass bei einer Beaufschlagung der Piezo-Wandler 20 mit der Signalfolge 32 Resonanz- oder Eigenschwingungsphänomene der Fördereinheit 22 weitgehend umgangen werden können.

Eine derartige unregelmäßige Ansteuerung der Piezo-Wandler erlaubt somit einen Betrieb der Fördereinheit 22 mit Anregungsfrequenzen zumindest oberhalb 500 Hz, vorzugsweise in kHz-Bereich.

Ähnlich verhält es sich mit dem resultierenden Steuersignal 42 des Diagramms 40 gemäß Fig. 3. Hier wird eine sägezahnähnliche Einzelsignalfolge 46 mit einer rechteckähnlichen Einzel-Signalfolge 44 linear superponiert. Als Folge hiervon entsteht ebenfalls eine vergleichsweise aperiodische und unregelmäßige Signalfolge 42.

Im Speichermodul 12 können entweder einzelne Signalfolgen 34, 36, 44, 46 und/oder auch deren Resultierende 32, 42 abgespeichert werden. Vor einem Abspeichern ist bevorzugt vorzusehen, die End- und Anfangssequenzen der jeweiligen Signale 32, 34, 36, 42, 44, 46 derart aufeinander abzustimmen, dass bei einer Endloswiedergabe der genannten Signalfolgen der Amplitudenverlauf weitgehend stetig ist.

Hierzu können mit einer Softwareroutine einzelne Signalfolgen entweder an geeigneten Stellen gekürzt, sozusagen "abgeschnitten" werden. Oder aber es kann eine dementsprechend geeignete Übergangssequenz mittels der Konfigurationseinrichtung 24 errechnet werden, die an die jeweilige Signalfolge 32, 34, 36, 42, 44, 46 anzuhängen ist.

Anstelle der synthetischen Erzeugung vergleichsweise unregelmäßiger Signalfolgen 32, 42 ist im Rahmen der Erfindung ferner denkbar, akustische Signale, wie etwa Gesang, Stimmen, beliebige Geräusche sowie Musiksignale als Einzel-Signalfolgen oder als Gesamtsignalfolgen zur Anregung der Piezo-Wandler 20 zu verwenden.

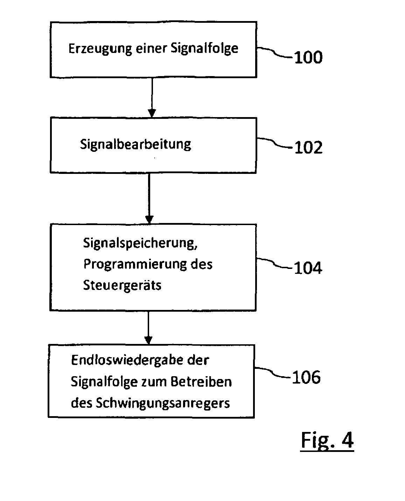

In Fig. 4 ist schließlich der Ablauf des erfindungsgemäßen Verfahrens schematisch dargestellt. In einem ersten Schritt 100 ist eine abzuspeichernde Signalfolge zu erzeugen. Dies kann entweder durch synthetische Erzeugung mittels eines Synthesizers oder geeigneter Software, vorzugsweise mit Hilfe eines PCs erreicht werden. Alternativ zur synthetischen Erzeugung einzelner alternierender elektrischer Signalfolgen kann auch vorgesehen werden, derartige Signale von akustischen Quellen, etwa durch Aufnehmen abzuleiten.

Nach erfolgter Erzeugung oder Aufnahme einer Signalfolge ist diese in einem nachfolgenden Schritt 102 zur Endloswiedergabe zu bearbeiten. Hierfür ist vorgesehen, die Anfangs- und Endsequenzen eines oder mehrerer aufgenommener Signale derart aufeinander abzustimmen, dass eine besonders harmonische, störungsfreie Endloswiedergabe der jeweiligen Signalfolge ermöglicht wird. Hiernach erfolgt im Schritt 104 eine Speicherung des erzeugten bzw. bearbeiteten Signals im Speichermodul 12 des Steuergeräts 10. Das Steuergerät 10 kann dabei ferner mit diversen Abspielmodi konfiguriert werden, die im Bedarfsfall auch bei abgekoppelter Konfigurationseinrichtung entweder von einem Anwender oder aber selbsttätig vom Steuerungssystem, etwa zur Optimierung oder zur Veränderung der Schwingungsanregung der Piezo-Wandler 20 ausgewählt werden können.

Im nachfolgend vorgesehenen Betrieb der Schwingfördereinrichtung ist im Schritt 106 eine Endloswiedergabe der abgespeicherten Signalfolge durch das Steuergerät bzw. durch dessen Wiedergabemodul 18 vorgesehen. Im Zuge des Abspielens der gespeicherten Signalfolge kann diese, ggf. mit Hilfe eines Verstärkers, den Piezo-Wandlern zugeführt werden.

### Bezugszeichenliste

- 10: Steuergerät
- 12: Speichermodul
- 14: Schnittstelle
- 16: Verstärker
- 18: Wiedergabemodul
- 20: Piezo-elektrischer Wandler
- 22: Fördereinheit
- 24: Konfigurationseinheit
- 26: Signalerzeugungsmodul
- 28: Benutzerschnittstelle
- 30: Diagramm
- 32: Steuersignalfolge
- 34: Einzel-Signalfolge
- 36: Einzel-Signalfolge
- 40: Diagramm
- 42: Steuersignalfolge
- 44: Einzel-Signalfolge
- 46: Einzel-Signalfolge

## Patentansprüche

1. Steuergerät zur Ansteuerung zumindest eines elektromechanischen Wandlers einer Schwingfördereinrichtung, mit zumindest einem Speichermodul (12) zum Abspeichern zumindest einer vorgegebenen elektrischen Signalfolge (32; 42) und mit einem Wiedergabemodul (18), welches zum Auslesen des Speichermoduls (12), zur wiederholenden Erzeugung der gespeicherten Signalfolge (32; 42) sowie zur Beaufschlagung des Wandlers mit der Signalfolge (32; 42) ausgebildet ist.

2. Steuergerät nach Anspruch 1, wobei das Wiedergabemodul (18) zur Wiedergabe der elektrischen Signalfolge (32; 42) in Form einer Endlosschleife ausgebildet ist.

3. Steuergerät nach einem der vorhergehenden Ansprüche, wobei das Speichermodul (12) zum Abspeichern mehrerer in Frequenz und Amplitude unterschiedlicher Einzel-Signalfolgen (34, 36; 44, 46) ausgebildet ist und das Wiedergabemodul (18) zur gleichzeitigen Wiedergabe mehrerer Einzel-Signalfolgen (34, 36; 44, 46) und/oder zur Wiedergabe einer Superposition (32; 42) mehrerer Einzel-Signalfolgen (34, 36; 44, 46) ausgebildet ist.

4. Steuergerät nach einem der vorhergehenden Ansprüche, wobei das Speichermodul (12) und/oder das Wiedergabemodul (18) mittels einer Konfigurationseinrichtung (24) konfigurierbar und/oder programmierbar sind.

5. Steuergerät nach einem der vorhergehenden Ansprüche, wobei die elektrische Signalfolge (32; 42) von einem oder von mehreren aufgenommenen akustischen Signalen ableitbar ist.

6. Steuergerät nach einem der vorhergehenden Ansprüche, wobei das Speichermodul (12) ein digitales Speichermedium aufweist.

7. Verfahren zur Ansteuerung zumindest eines elektromechanischen Wandlers einer Schwingfördereinrichtung, **gekennzeichnet durch** die folgenden Schritte:
- Abspeichern zumindest einer elektrischen Signalfolge in einem Speichermodul (12) eines mit dem Wandler (20) gekoppelten Steuergeräts (10),
- Auslesen des Speichermoduls (12) zum Abspielen der abgespeicherten Signalfolge (32; 42);
- Abspielen und Weiterleitung der Signalfolge an den zumindest einen Wandler.

8. Verfahren nach Anspruch 7, wobei die Signalfolge in einer Endlosschleife wiedergegeben wird.

9. Verfahren nach einem der vorhergehenden Ansprüche 7 oder 8, wobei die Signalfolge vor einem Abspeichern derart bearbeitet wird, dass das Ende und der Anfang der Signalfolge hinsichtlich Amplitude, Frequenz und/oder Signalflanke aufeinander abgestimmt sind.

10. Verfahren nach einem der vorhergehenden Ansprüche 7 bis 9, wobei die abzuspeichernde Signalfolge (32; 42) von einem akustischen Signal, einem Klang oder einem Geräusch abgeleitet wird.

11. Verfahren nach einem der vorhergehenden Ansprüche 7 bis 10, wobei die abzuspeichernde und/oder wiederzugebende Signalfolge (32; 42) durch Überlagerung mehrerer Einzel-Signalfolgen (34, 36; 44, 46) derart gebildet wird, dass die Periodendauer der resultierenden Signalfolge (32; 42) im Bereich mehrerer Minuten, vorzugsweise im Bereich einer oder mehrerer Stunden liegt.

12. Steuerungssystem zur Ansteuerung einer zumindest einen elektromechanischen Wandler aufweisenden Schwingfördereinrichtung mit einem Steuergerät (10) nach einem der vorhergehenden Ansprüche 1 bis 6 und mit einer Konfigurationseinrichtung (24), wobei die Konfigurationseinrichtung (24) zur Erzeugung und/oder Bearbeitung einer oder mehrerer elektrischer Signalfolgen ausgebildet und zum Abspeichern der Signalfolge (32; 42) in einem Speichermodul (12) des Steuergeräts (10) mit dem Steuergerät koppelbar ist.

13. Schwingfördereinrichtung zur Zufuhr von Bauteilen mit zumindest einer Fördereinheit (22) und mit zumindest einem elektromechanischem Wandler (20), der von einem Steuergerät (10) nach einem der vorhergehenden Ansprüche 1 bis 6 ansteuert wird.

## Geänderte Patentansprüche

### Geänderte Patentansprüche gemäss Regel 137(2) EPÜ.

**1.** Steuergerät zur Ansteuerung zumindest eines elektromechanischen Wandlers einer Schwingfördereinrichtung, mit zumindest einem Speichermodul (12) zum Abspeichern zumindest einer vorgegebenen elektrischen Signalfolge (32; 42) und mit einem Wiedergabemodul (18), welches zum Auslesen des Speichermoduls (12), zur wiederholenden Erzeugung der gespeicherten Signalfolge (32; 42) sowie zur Beaufschlagung des Wandlers mit der Signalfolge (32; 42) ausgebildet ist, **dadurch gekennzeichnet, dass** das Wiedergabemodul (18) in Bezug auf eine Erzeugung der Signalfolge (32; 42) lediglich zum Auslesen und Reproduzieren der im Speichermodul (12) zuvor abgelegten elektrischen Signalfolge (32; 42) ausgebildet ist.

**2.** Steuergerät nach Anspruch 1, wobei das Wiedergabemodul (18) zur Wiedergabe der elektrischen Signalfolge (32; 42) in Form einer Endlosschleife ausgebildet ist.

**3.** Steuergerät nach einem der vorhergehenden Ansprüche, wobei das Speichermodul (12) zum Abspeichern mehrerer in Frequenz und Amplitude unterschiedlicher Einzel-Signalfolgen (34, 36; 44, 46) ausgebildet ist und das Wiedergabemodul (18) zur gleichzeitigen Wiedergabe mehrerer Einzel-Signalfolgen (34, 36; 44, 46) und/oder zur Wiedergabe einer Superposition (32; 42) mehrerer Einzel-Signalfolgen (34, 36; 44, 46) ausgebildet ist.

**4.** Steuergerät nach einem der vorhergehenden Ansprüche, wobei das Speichermodul (12) und/oder das Wiedergabemodul (18) mittels einer Konfigurationseinrichtung (24) konfigurierbar und/oder programmierbar sind.

**5.** Steuergerät nach einem der vorhergehenden Ansprüche, wobei die elektrische Signalfolge (32; 42) von einem oder von mehreren aufgenommenen akustischen Signalen abgeleitet ist.

**6.** Steuergerät nach einem der vorhergehenden Ansprüche, wobei das Speichermodul (12) ein digitales Speichermedium aufweist.

**7.** Verfahren zur Ansteuerung zumindest eines elektromechanischen Wandlers einer Schwingfördereinrichtung, **gekennzeichnet durch** die folgenden Schritte:
- Abspeichern zumindest einer elektrischen Signalfolge in einem Speichermodul (12) eines mit dem Wandler (20) gekoppelten Steuergeräts (10),
- Auslesen des Speichermoduls (12) zum Abspielen der abgespeicherten Signalfolge (32; 42);
- Abspielen und Weiterleitung der Signalfolge an den zumindest einen Wandler, **dadurch gekennzeichnet, dass** die abzuspeichernde Signalfolge (32; 42) von einem akustischen Signal, einem Klang oder einem Geräusch abgeleitet wird.

**8.** Verfahren nach Anspruch 7, wobei die Signalfolge in einer Endlosschleife wiedergegeben wird.

**9.** Verfahren nach einem der vorhergehenden Ansprüche 7 oder 8, wobei die Signalfolge vor einem Abspeichern derart bearbeitet wird, dass das Ende und der Anfang der Signalfolge hinsichtlich Amplitude, Frequenz und/oder Signalflanke aufeinander abgestimmt sind.

**10.** Verfahren nach einem der vorhergehenden Ansprüche 7 bis 9, wobei die abzuspeichernde und/oder wiederzugebende Signalfolge (32; 42) durch Überlagerung mehrerer Einzel-Signalfolgen (34, 36; 44, 46) derart gebildet wird, dass die Periodendauer der resultierenden Signalfolge (32; 42) im Bereich mehrerer Minuten, vorzugsweise im Bereich einer oder mehrerer Stunden liegt.

**11.** Steuerungssystem zur Ansteuerung einer zumindest einen elektromechanischen Wandler aufweisenden Schwingfördereinrichtung mit einem Steuergerät (10) nach einem der vorhergehenden Ansprüche 1 bis 6 und mit einer Konfigurationseinrichtung (24), wobei die Konfigurationseinrichtung (24) zur Erzeugung und/oder Bearbeitung einer oder mehrerer elektrischer Signalfolgen ausgebildet und zum Abspeichern der Signalfolge (32; 42) in einem Speichermodul (12) des Steuergeräts (10) mit dem Steuergerät koppelbar ist.

**12.** Schwingfördereinrichtung zur Zufuhr von Bauteilen mit zumindest einer Fördereinheit (22) und mit zumindest einem elektromechanischem Wandler (20) sowie mit einem Steuergerät (10) nach einem der vorhergehenden Ansprüche 1 bis 6 zur Ansteuerung des elektromechanischen Wandlers.
